# EUROPEAN PATENT APPLICATION

(11) **EP 4 498 026 A1**
(43) Date of publication of application: **29.01.2025**
(21) Application number: 23803761.8
(22) Date of filing: 04.05.2023
(51) Int. Cl.: F27B 7/08, F27B 7/34, F27B 7/32, F27B 7/00, F27B 7/20

(54) **ROTARY KILN**

(30) Priority: 10.05.2022 KR 20220057238
(71) Applicant: LG Chem, Ltd., Yeongdeungpo-gu Seoul 07336 (KR)
(72) Inventor: YOON, Jong Seol, Daejeon 34122 (KR); RYOO, Chang Seok, Daejeon 34122 (KR); NHO, Jun Seok, Daejeon 34122 (KR)
(74) Representative: Hoffmann Eitle
(86) International application number: PCT/KR2023/006103
(87) International publication number: WO 2023/219338

(57) **Abstract**

The present invention relates to a rotary kiln for sintering raw material powder. The rotary kiln includes: a sintering device provided with a tube assembly configured to mix the raw material powder while rotating in a state of being disposed in a horizontal direction and a heating assembly configured to heat the raw material powder that is mixed by the tube assembly; a supply device provided with a supply assembly inserted into one end of the tube assembly to supply the raw material powder into the tube assembly and a collecting assembly provided on one end of the tube assembly to collect a gas and vapor, which are generated while heating the raw material powder supplied into the tube assembly; and a condensing device configured to condense the vapor collected in the collecting assembly to liquefy the vapor into a liquid state. As a result, the vapor generated in the tube assembly may be smoothly removed.

## Description

### TECHNICAL FIELD

### CROSS-REFERENCE TO RELATED APPLICATION

The present application claims the benefit of the priority of Korean Patent Application No. 10-2022-0057238, filed on May 10, 2022, which is hereby incorporated by reference in its entirety.

### TECHNICAL FIELD

The present invention relates to a rotary kiln capable of collecting vapor generated during heating of raw material powder to condense the vapor into a liquid state so as to remove the condensate.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

Particularly, as technology development and demands for mobile devices increase, the demands for secondary batteries as energy sources are rapidly increasing. Among these secondary batteries, a lithium secondary battery having a high energy density and voltage, a long cycle life, and a low self-discharge rate has been commercialized and widely used.

In the lithium secondary battery, lithium transition metal oxide is used as a positive electrode active material. That is, lithium cobalt oxide having a high operating voltage and excellent capacity characteristics, lithium nickel oxide having a high reversible capacity of about 200 mAh/g and easy implementation of large-capacity batteries, lithium nickel cobalt oxide in which a portion of nickel is substituted with cobalt, lithium nickel cobalt metal oxide in which a portion of nickel is substituted with manganese, cobalt or aluminum, low-cost lithium manganese oxide having excellent thermal stability, lithium iron phosphate having excellent stability, and the like are being used as the positive electrode active material.

The positive electrode active material is prepared by mixing a precursor for producing the positive electrode active material with the lithium raw material and then putting the mixture into a heating device to perform sintering at a high temperature.

Here, a rotary kiln may be applied as the heating device. The rotary kiln includes a rotating tube accommodating a precursor for producing a positive electrode active material and a lithium row material (hereinafter, referred to as a raw material powder) and rotating the above-described materials in a horizontal direction to mix the materials, a heating body provided outside the rotating tube and applying heat to the rotating tube to heat the raw material powder so that the raw material powder reacts, a supply member supplying the raw material powder to the rotating tube, and a collecting member collecting the raw material powder discharged from the rotating tube.

The raw material powder contains moisture. That is, when the raw material powder is heated, moisture is evaporated to generate vapor. Here, it is necessary to smoothly discharge and remove the vapor generated inside the rotating tube for smoothly mixing and drying the raw material powder.

### DISCLOSURE OF THE INVENTION

### TECHNICAL PROBLEM

An object of the present invention is to provide a rotary kiln capable of collecting vapor generated during heating of raw material powder outside a rotating tube to condense the vapor into a liquid state so as to remove the condensate.

### TECHNICAL SOLUTION

A rotary kiln for sintering raw material powder according to the present invention includes: a sintering device provided with a tube assembly configured to mix the raw material powder while rotating in a state of being disposed in a horizontal direction and a heating assembly configured to heat the raw material powder that is mixed by the tube assembly; a supply device provided with a supply assembly inserted into one end of the tube assembly to supply the raw material powder into the tube assembly and a collecting assembly provided on one end of the tube assembly to collect a gas and vapor, which are generated while heating the raw material powder supplied into the tube assembly; and a condensing device configured to condense the vapor collected in the collecting assembly to liquefy the vapor into a liquid state.

The collecting assembly may include a chamber connected to one end of the tube assembly to collect the gas and vapor, which are discharged from the tube assembly, and the condensing device may include a condensing tube provided inside the chamber to condense the vapor collected into the chamber through a refrigerant so as to liquefy the vapor into the liquid state, a supply part configured to supply the refrigerant into the condensing tube, and a collecting part configured to collect the refrigerant passing through the condensing tube.

The condensing device may further include: a fixing plate, on which the condensing tube is installed; and one or more condensing plates connected to the condensing tube to diffuse cold air transferred from the condensing tube so that the vapor is condensed, wherein the condensing plate may be provided to be elongated in a vertical direction that is perpendicular to a longitudinal direction of the tube assembly.

The fixing plate may be made of the same material as the condensing plate.

The supply assembly may include: an input tube which is inserted into one end of the tube assembly and into which the raw material powder is put; and a transfer screw provided in the input tube and configured to move the raw material powder toward the tube assembly during rotating so as to supply the raw material powder to the tube assembly, wherein the condensing device may be installed close to the input tube.

The condensing device may further include a blocking plate provided in the input tube disposed at one end of the tube assembly to block an inflow of the condensed liquid into the tube assembly.

The blocking plate may have a disk shape surrounding an outer circumferential surface of the input tube.

The blocking plate may be provided to be position-adjustable in a longitudinal direction of the input tube.

The condensing device may further include a hopper provided in a bottom surface of the chamber, configured to collect a liquid dropping from the condensing device and a liquid dropping from the blocking plate so as to discharge the liquids to the outside.

The collecting assembly may further include a protection member configured to seal a gap between an end of the tube assembly and the chamber, wherein the protection member may include: a fixed tube fixed to the chamber; a support tube supported on an outer circumferential surface of the tube assembly; and a connection tube provided in the form of a corrugated tube to connect the fixed tube to the support tube.

The rotary kiln may further include a collecting member configured to collect the raw material powder discharged from the tube assembly.

The condensing tube may be provided in a 'U' shape, and the supply part and the collecting part may be connected to both ends of the condensing tube provided in the 'U' shape to protrude to the outside of the chamber, respectively.

### ADVANTAGEOUS EFFECTS

The rotary kiln of the present invention may include the sintering device, the supply device, and the condensing device to collect the vapor generated during the heating of the raw material powder and condense the vapor into the liquid state so as to remove the condensate. Particularly, the occurrence of the defective operation of the supply device due to the vapor may be previously prevented.

### BRIEF DESCRIPTION OF THE DRAWINGS

FIG. 1 is a front view illustrating a rotary kiln according to a first embodiment of the present invention.
FIG. 2 is an enlarged view of a portion 'A' illustrated in FIG. 1.
FIG. 3 is a cross-sectional view taken along line B-B of FIG. 1.
FIG. 4 is an enlarged view of a portion 'C' illustrated in FIG. 1.
FIG. 5 is an enlarged view of a portion 'D' illustrated in FIG. 1.
FIG. 6 is an enlarged view illustrating a protection member of a collecting device according to the present invention.
FIG. 7 is a cross-sectional view of a rotary kiln according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Rotary kiln according to first embodiment of the present invention]

A rotary kiln according to a first embodiment of the present invention has a structure capable of collecting vapor generated when raw material powder is heated and then condensing the collected vapor into a liquid state to remove the condensate. Thus, the vapor generated inside the rotary kiln may be smoothly removed, and as a result, the raw material powder may be stably mixed and dried.

Hereinafter, the rotary kiln according to the first embodiment of the present invention will be described in detail with reference to the accompanying drawings.

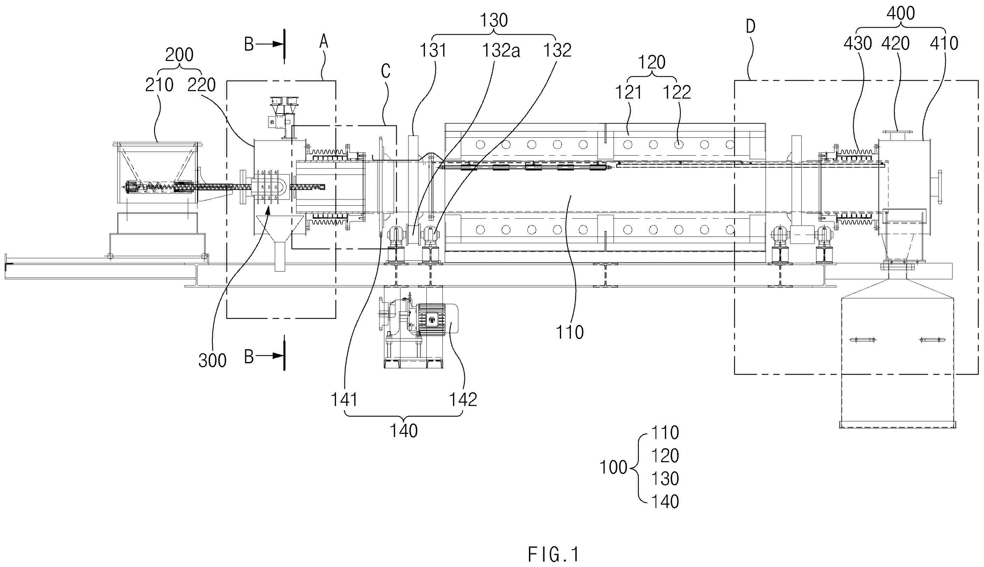

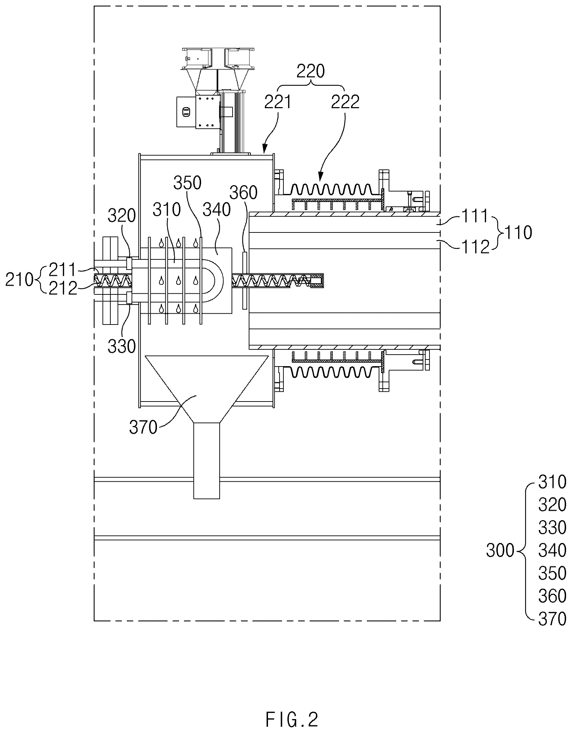

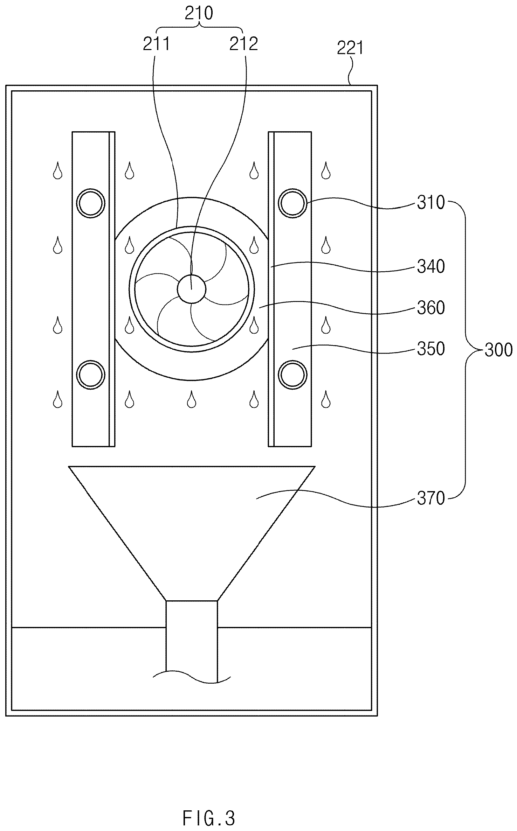

FIG. 1 is a front view illustrating a rotary kiln according to a first embodiment of the present invention, FIG. 2 is an enlarged view of a portion 'A' illustrated in FIG. 1, and FIG. 3 is a cross-sectional view taken along line B-B of FIG. 1.

The rotary kiln according to the first embodiment of the present invention is configured to sinter raw material powder and includes a sintering device 100, a supply device 200, a condensing device 300, and a collecting device 400.

### Sintering device

The sintering device 100 includes a tube assembly 110 that mixes the raw material powder while rotating in a state of being disposed in a horizontal direction and a heating assembly 120 that heats the raw material powder mixed by the tube assembly 110.

The tube assembly 110 has a structure extending in the horizontal direction and has a double structure including an outer tube 111 and an inner tube 112 provided inside the outer tube 111. In addition, the tube assembly 110 is made of a metal material having excellent thermal conductivity. For example, the tube assembly 110 may be made of a nickel material.

The tube assembly 110 having such a structure may smoothly mix the input raw material powder while rotating in the horizontal direction.

The heating assembly 120 is configured to heat the raw material powder put into the tube assembly 110.

For example, the heating assembly 120 may be disposed in a shape surrounding an outer circumferential surface of the tube assembly 110 and may heat the raw material powder put into the tube assembly 110 as the outside of the tube assembly 110 is heated.

That is, the heating assembly 120 includes a heating body 121 provided in a shape surrounding an outer surface of the tube assembly 110 and a heating medium 122 provided in the heating body 121 corresponding to the tube assembly 110 to heat the tube assembly 110.

Here, the heating medium may be any one of an electric heat generation element, SIC, Mo-Si, and a gas burner.

The outer surface of the heating body 121 is made of a heat-resistant material so that the heat source of the heating medium 122 is not discharged to the outside.

The heating assembly 120 having such a structure may smoothly heat the raw material powder mixed by the tube assembly 110.

The sintering device 100 includes a support member 130 configured to support the tube assembly 110 to rotate in the horizontal direction.

The support member includes a rotary gear 131 provided in a shape surrounding the outer circumferential surface of the tube assembly 110 and a support 132 provided with a support gear that is engaged with each of both sides of a bottom surface of the rotary gear 131 to support the rotary gear 131 and rotate by the rotary gear 131.

That is, in the support member 130, when the tube assembly 110 rotates, the rotary gear 131 rotates by being interlocked with the tube assembly 110, and the support gear 132a rotates by the rotary gear 131. Here, since the support gear 132a supports both sides of a lower portion of the rotary gear 131, the tube assembly 110 rotating in the horizontal direction may be stably supported.

The sintering device 100 includes a rotating member 140 configured to rotate the tube assembly 110 in the horizontal direction. The rotating member 140 includes a driving gear 141 coupled to surround the outer circumferential surface of the tube assembly 110 and a driving motor 142 engaged with the driving gear 141 to rotate the tube assembly 110 in the horizontal direction through the driving gear 141.

### Supply device

The supply device 200 is configured to supply the raw material powder to the tube assembly and includes a supply assembly 210 and a collecting assembly 220.

The supply assembly 210 has a structure for supplying the raw material powder into the tube assembly 110 while being inserted into one end (a left end of the tube assembly when viewed in FIG. 1) of the tube assembly 110.

That is, the supply assembly 210 includes an input tube 211 which is inserted into one end of the tube assembly 110 and into which the raw material powder is put, and a transfer screw 212 provided inside the input tube 211 to move the raw material powder to the tube in the direction of the tube assembly 110 during the rotation so as to supply the raw material powder to the tube assembly 110.

Here, the input tube 211 may be provided with an inlet, through which the raw material powder is input, at one end thereof and an outlet, through which the raw material powder is discharged through the tube assembly 110, at the other end thereof.

The collecting assembly 220 is provided at one end of the tube assembly 110 and has a structure for collecting a gas and vapor generated when heating the raw material powder supplied to the inside of the tube assembly 110. That is, the collecting assembly 220 has a structure for collecting a gas and vapor discharged from one end of the tube assembly 110.

For example, the collecting assembly 220 includes a chamber 221 provided in a shape surrounding one end of the tube assembly 110 and collecting the gas and vapor discharged from the tube assembly 110 and a protection member 222 that seals a gap between one end of the tube assembly 110 and the chamber 221.

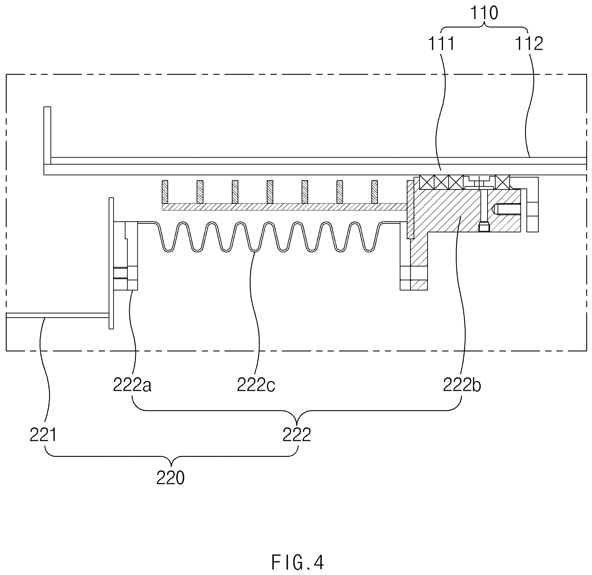

FIG. 4 is an enlarged view of a portion C illustrated in FIG. 1.

Here, the protection member 222 includes a fixed tube 222a fixed to the chamber 221, a support tube 222b supported on the outer circumferential surface of the tube assembly 110, and a connection tube 222c having a shape of a corrugated tube to connect the fixed tube 222a to the support tube 222b. Thus, the protection member may protect the gap between the tube assembly 110 and the chamber 221 from the outside.

### Condensing device

The condensing device 300 is configured to condense the vapor collected in the chamber 221 of the collecting assembly 220 to liquefy the vapor into a liquid state.

That is, the condensing device 300 includes a condensing tube 310 provided inside the chamber 221 to condense the vapor collected in the chamber 221 through a supplied refrigerant so as to liquefy the condensed vapor, a supply part 320 supplying the refrigerant to the condensing tube 310, and a collecting part 330 collecting the refrigerant passing through the condensing tube 310.

In the condensing device 300 having such a structure, when the refrigerant is supplied to the condensing tube 310 through the supply part 320, cold air may be diffused into the chamber 221 through the condensing tube 310 to condense the vapor collected in the chamber 221, and thus, the vapor may be liquefied into the liquid state, and as a result, the vapor may be effectively removed. The refrigerant passing through the condensing tube 310 is collected through the collecting part 330.

Here, the condensing tube 310 is made of a metal material, and preferably, the condensing tube 310 may be made of a copper material.

The condensing tube 310 may be provided in a zigzag-bent form. This may increase in residence time of the refrigerant passing through the condensing tube 310, and as a result, the vapor may be condensed more effectively. For example, the condensing tube 310 may be provided in a 'U' or 'L' shape.

When the condensing tube 310 has the 'U' shape, the supply part 320 and the collecting part 330 are connected to both ends of the 'U'-shaped condensing tube 310, respectively. Particularly, the supply part 320 and the collecting part 330 may be provided to protrude out of the chamber 221, and thus, a refrigerant generator (not shown), the supply part 320, and the collecting part 330 may be easily connected or separated to improve work efficiency.

When the vapor is condensed in the input tube 211 of the supply assembly 210, conduction of heat applied to the transfer screw 212 is blocked, and as a result, a problem in a smooth operation of the transfer screw 212 may occur. To prevent this problem, the condensing tube 310 of the condensing device 300 may be installed close to the input tube 211. Thus, the condensing tube 310 may condense the vapor before condensing the vapor into the input tube 211, and as a result, the smooth operation of the transfer screw 212 may be maintained.

The condensing tube 310 may be spaced a set distance from the input tube 211. That is, when the condensing tube 310 is in close contact with the inlet tube 211, frictional noise may occur, and the liquid condensed in the condensing tube 310 may flow into the outer circumferential surface of the inlet tube 211.

The condensing device 300 may include a fixing plate 340 on which the condensing tube 310 is installed. The fixing plate 340 has a rectangular plate shape and is fixed inside the chamber 221 using a fixing means, and the condensing tube 310 is fixed to one surface of the fixing plate 340 by welding or clipping.

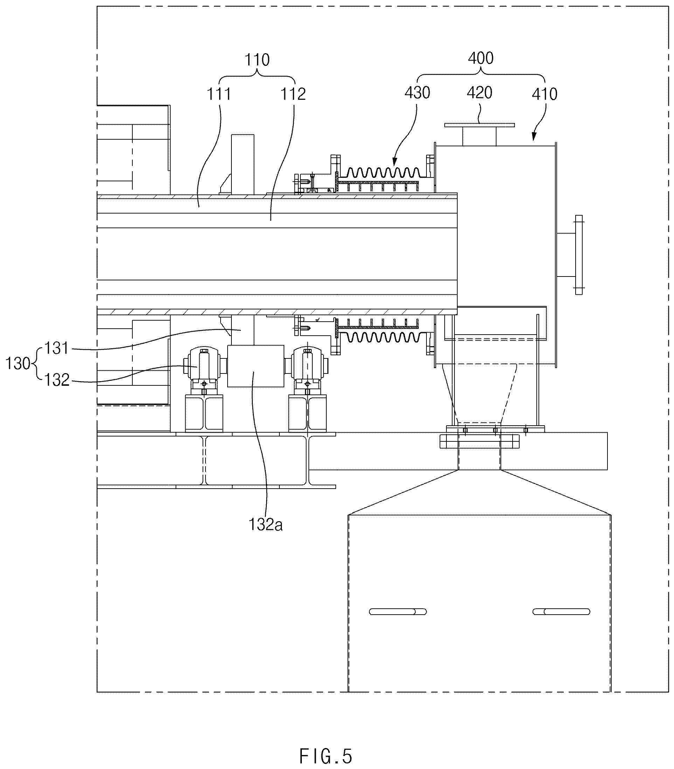

The condensing device 300 may include one or more condensing plates 350 that improves condensing power of the vapor. The condensing plate 350 is connected to the condensing tube 310 to diffuse the cold air transferred from the condensing tube 310 into the chamber 221, thereby effectively condensing the vapor collected in the chamber 221. Particularly, referring to FIG. 5, the condensing plate 350 may be provided to be elongated in a vertical direction that is perpendicular to the longitudinal direction of the tube assembly 110. Particularly, the condensing plate 350 may be provided in at least two or more, preferably four or more. Thus, the liquid condensed on the condensing plate 350 may smoothly drop to be removed.

The fixing plate 340 may be made of the same material as the condensing plate 350. In other words, the condensing tube 310, the fixing plate 340, and the condensing plate 350 may be made of the same material, and thus, the vapor may be condensed through the fixing plate 340, and as a result, the vapor may be condensed more quickly to be removed.

The condensing device 300 further includes a blocking plate 360 provided to the input tube 211 disposed at one end of the tube assembly 110.

That is, the blocking plate 360 may block the condensed liquid from flowing into the tube assembly 110 along the input tube 211 to prevent the liquid from being mixed with the raw material powder supplied to the tube assembly 110.

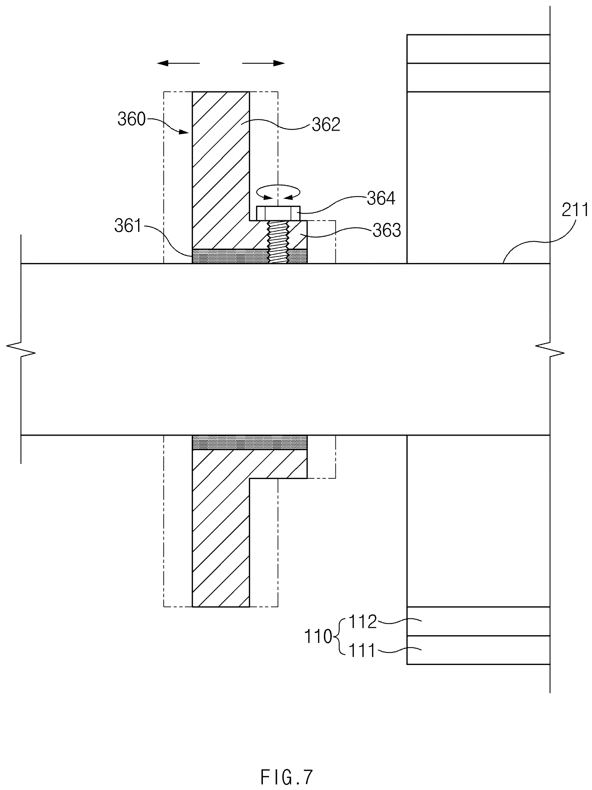

Particularly, the blocking plate 360 may be provided in a shape surrounding an outer circumferential surface of the input tube 211. For example, the blocking plate 360 may have a disk shape as illustrated in FIG. 3. Thus, the entire outer circumferential surface of the input tube 211 may be stably covered. Referring to FIG. 7, a rubber pad 361 may be further provided between the input tube 211 and the blocking plate 360 to increase in sealing power.

Here, one blocking plate 360 may be provided on the outer circumferential surface of the input tube 211, but two or more blocking plates 360 may be provided in the input tube 211 to stably block the penetration of the liquid. Particularly, when the two or more blocking plates 360 are provided in the input tube 211, one blocking plate 360 corresponding to the tube assembly 110 may be made of a heat-resistant material to prevent the blocking plate from being damaged by the heat of the tube assembly 110.

The condensing device 300 may include the refrigerant generator (not shown) that supplies the refrigerant to the supply part 320 and collects the refrigerant passing through the collecting part 330. The refrigerant generator may be applied to any device that normally generates the refrigerant.

The condensing device 300 may include a hopper 370 that discharges the liquid condensed inside the chamber 221 to the outside. The hopper 370 is provided on the bottom surface of the chamber 221, and after collecting the liquid falling from the condensing device 300 and the liquid falling from the blocking plate 360, the liquid is discharged to the outside through the connection tube that is connected to be elongated.

Here, the hopper 370 may be provided at a lower portion of the condensing device 300 and below the blocking plate 360 and may be provided to cover the entire lower portion of the condensing device 300 and the entire lower side of the blocking plate 360.

The condensing device 300 having such a structure may quickly and smoothly condense the vapor collected inside the chamber 221 to liquefy the vapor into a liquid state and may smoothly discharge the condensed liquid to the outside to remove the liquid. Particularly, the condensing device 300 may prevent the condensation of the vapor in the supply assembly 210 to prevent malfunctions from occurring in advance.

### Collecting device

FIG. 5 is an enlarged view of a portion D illustrated in FIG. 1.

The collecting device 400 has a structure that collects the raw material powder discharged from the tube assembly 110.

That is, the collecting device 400 includes a collecting member 410 into which the other end of the tube assembly 110 (a right end of the tube assembly 110 when viewed in FIG. 1) is freely rotatably inserted, and the collecting member 410 collects the raw material powder discharged from the tube assembly 110 to moves the raw material powder to a set place so as to store the raw material powder.

Here, the collecting member 410 may be provided to be separable from the other end of the tube assembly 110, and thus, the other end of the tube assembly 110 and the collecting member 410 may be more easily maintained.

The collecting member 410 and the other end of the tube assembly 110 may be maintained to be spaced a set interval from each other. Thus, a heat source of the tube assembly 110 may be prevented from being directly conducted to the collecting member 410.

The collecting device 400 may include a gas discharge member 420 that discharges a gas inside the tube assembly 110, and the gas discharge member 420 may be provided on an upper end of the collecting member 410. That is, the gas discharge member 420 filters the gas collected in the collecting member 410 from the tube assembly 110 and then discharges only air without impurities to the outside.

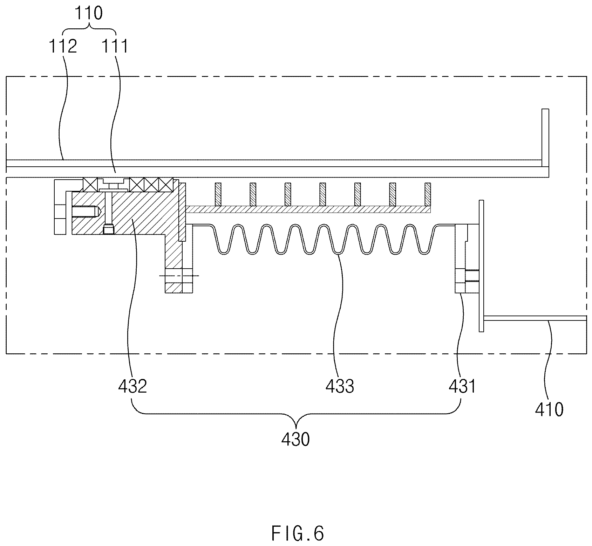

FIG. 6 is an enlarged view illustrating a protection member of the collecting device according to the present invention.

The collecting device 400 may include a protection member 430 that sealingly connects the collecting member 410 to the tube assembly 110. The protection member 430 includes a fixed tube 431 fixed to the collecting member 410, a support tube 432 supported at the other end of the tube assembly 110, and a connection tube 433 that is provided in the form of a corrugated tube to connect the fixed tube to the support tube.

Therefore, the rotary kiln according to the first embodiment of the present invention includes the sintering device 100, the supply device 200, and the condensing device 300 to smoothly collect the vapor generated in the tube assembly 110 and then smoothly condense the collected vapor, thereby removing the condensed vapor.

Hereinafter, an operation of the rotary kiln according to the first embodiment of the present invention will be described.

### [Operation method of rotary kiln according to first embodiment of the present invention]

First, a tube assembly 110 of a sintering device 100 rotates in a horizontal direction. Then, the tube assembly 110 is heated at a set temperature using a heating assembly 120 and then is maintained.

When the tube assembly 110 is maintained at the set temperature, raw material powder is supplied to one end of the tube assembly 110 through a supply assembly 210 of a supply device 200. Then, the raw material powder is mixed and heated at the same time by the heated tube assembly 110. Particularly, the raw material powder moves a little in a direction of the other end of the tube assembly 110.

Here, a gas and vapor are generated when the raw material powder is heated, and the gas and vapor are collected in a chamber 221 of a collecting assembly 220 through one end of the tube assembly 110.

Here, the condensing device 300 is provided inside the chamber 221, and the condensing device 300 may condense the vapor collected in the chamber 221 through a supplied refrigerant to liquefy the vapor into a liquid state. As a result, the vapor collected in the chamber 221 may be quickly and smoothly removed. Particularly, the condensing device 300 is provided with a condensing tube 310, a fixing plate 340, and a condensing plate 350 to more smoothly condense the vapor.

The liquid condensed by the condensing device 300 may be introduced into a hopper 370, and the liquid introduced into the hopper 370 may be removed while being discharged to the outside through a discharge tube connected to the hopper 370.

Hereinafter, in descriptions of another embodiment of the present invention, constituents having the same function as the above-mentioned embodiment have been given the same reference numeral in the drawings, and thus duplicated description will be omitted.

### [Rotary kiln according to second embodiment of the present invention]

FIG. 7 is a cross-sectional view of a rotary kiln according to a second embodiment of the present invention.

A rotary kiln according to a second embodiment of the present invention corresponds to another embodiment of the blocking plate 360 of the configuration of the rotary kiln according to the forgoing first embodiment of the present invention.

That is, a blocking plate 360 of the rotary kiln according to the second embodiment of the present invention may be provided to be adjustable in position in a longitudinal direction of an input tube 211.

That is, the blocking plate 360 may move in the longitudinal direction of the input tube 211 and thus be disposed close to one end of the tube assembly 110 or be disposed spaced a set distance from one end of the tube assembly 110.

For example, the blocking plate 360 may include a blocking part 362 provided in a shape surrounding an outer circumferential surface of the input tube 211, a fixing part 363 provided to be integrated with one surface of the blocking part 362, and a fixing bolt 364 passing through the fixing part so as to be press-fitted into the input tube 211. That is, the blocking plate 360 may be fixed to the input tube 211 by tightening the fixing bolt 364, and the blocking plate 360 may move in the longitudinal direction of the input tube 211 by loosening the fixing bolt 364.

Therefore, the rotary kiln according to the second embodiment of the present invention may be provided with the blocking plate 360, which is adjustable in position, in the longitudinal direction of the input tube 211 to improve efficiency of use.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

100: Sintering device
110: Tube assembly
111: Outer tube
112: Inner tube
120: Heating assembly
121: Heating body
122: Heating medium
130: Support member
131: Rotary gear
132: Support
132a: Support gear
140: Rotating member
141: Driving gear
142: Driving motor
200: Supply device
210: Supply assembly
211: Input tube
212: Transfer screw
220: Collecting assembly
221: Chamber
222: Protection member
222a: Fixed tube
222b: Support tube
222c: Connection tube
300: Condensing device
310: Condensing tube
320: Supply part
330: Collecting part
340: Fixing plate
350: Condensing plate
360: Blocking plate
361: Rubber pad
362: Blocking part
363: Fixing part
364: Fixing bolt
370: Hopper
400: Collecting device
410: Collecting member
420: Gas discharge member
430: Protection member

## Claims

1. A rotary kiln for sintering raw material powder, the rotary kiln comprising:
a sintering device provided with a tube assembly configured to mix the raw material powder while rotating in a state of being disposed in a horizontal direction and a heating assembly configured to heat the raw material powder that is mixed by the tube assembly;
a supply device provided with a supply assembly inserted into one end of the tube assembly to supply the raw material powder into the tube assembly and a collecting assembly provided on one end of the tube assembly to collect a gas and vapor, which are generated while heating the raw material powder supplied into the tube assembly; and
a condensing device configured to condense the vapor collected in the collecting assembly to liquefy the vapor into a liquid state.

2. The rotary kiln of claim 1, wherein the collecting assembly comprises a chamber connected to one end of the tube assembly to collect the gas and vapor, which are discharged from the tube assembly, and
the condensing device comprises a condensing tube provided inside the chamber to condense the vapor collected into the chamber through a refrigerant so as to liquefy the vapor into the liquid state, a supply part configured to supply the refrigerant into the condensing tube, and a collecting part configured to collect the refrigerant passing through the condensing tube.

3. The rotary kiln of claim 2, wherein the condensing device further comprises:
a fixing plate, on which the condensing tube is installed; and
one or more condensing plates connected to the condensing tube to diffuse cold air transferred from the condensing tube so that the vapor is condensed,
wherein the condensing plate is provided to be elongated in a vertical direction that is perpendicular to a longitudinal direction of the tube assembly.

4. The rotary kiln of claim 3, wherein the fixing plate is made of the same material as the condensing plate.

5. The rotary kiln of claim 2, wherein the supply assembly comprises:
an input tube which is inserted into one end of the tube assembly and into which the raw material powder is put; and
a transfer screw provided in the input tube and configured to move the raw material powder toward the tube assembly during rotating so as to supply the raw material powder to the tube assembly,
wherein the condensing device is installed close to the input tube.

6. The rotary kiln of claim 5, wherein the condensing device further comprises a blocking plate provided in the input tube disposed at one end of the tube assembly to block an inflow of the condensed liquid into the tube assembly.

7. The rotary kiln of claim 6, wherein the blocking plate has a disk shape surrounding an outer circumferential surface of the input tube.

8. The rotary kiln of claim 6, wherein the blocking plate is provided to be position-adjustable in a longitudinal direction of the input tube.

9. The rotary kiln of claim 6, wherein the condensing device further comprises a hopper provided in a bottom surface of the chamber, configured to collect a liquid dropping from the condensing device and a liquid dropping from the blocking plate so as to discharge the liquids to the outside.

10. The rotary kiln of claim 2, wherein the collecting assembly further comprises a protection member configured to seal a gap between an end of the tube assembly and the chamber,
wherein the protection member comprises:
a fixed tube fixed to the chamber;
a support tube supported on an outer circumferential surface of the tube assembly; and
a connection tube provided in the form of a corrugated tube to connect the fixed tube to the support tube.

11. The rotary kiln of claim 1, further comprising a collecting member configured to collect the raw material powder discharged from the tube assembly.

12. The rotary kiln of claim 2, wherein the condensing tube is provided in a zigzag shape, and
the supply part and the collecting part are connected to both ends of the condensing tube provided in the zigzag shape to protrude to the outside of the chamber, respectively.
